# EUROPEAN PATENT SPECIFICATION

(11) **EP 3 386 658 B1**
(45) Date of publication and mention of the grant of the patent: **14.07.2021**
(21) Application number: 16829153.2
(22) Date of filing: 05.12.2016
(51) Int. Cl.: B21C 47/24

(54) **COIL VIBRATION SYSTEM**
SPULENSCHWINGUNGSSYSTEM
SYSTÈME DE VIBRATION DE BOBINE

(30) Priority: 07.12.2015 US 201562263928 P
(43) Date of publication of application: 17.10.2018
(73) Proprietor: Primetals Technologies USA LLC, Alpharetta, GA 30005 (US)
(72) Inventor: SPENCER, Steven, Windham ME 04062 (US)
(74) Representative: Metals@Linz
(86) International application number: PCT/US2016/064918
(87) International publication number: WO 2017/100120

(56) References cited:
- JP-A- H02 270 770
- JP-A- H04 213 566
- JP-A- 2010 195 522
- US-A- 3 238 864

## Description

This invention relates generally to hot rolling mills producing rods, bars and other like long products which are directed to pouring reels or reform stations where they are gathered as superimposed rings in upstanding coils, and is concerned in particular with a system for vibrating such coils according to the preamble of claim 1 to more uniformly re-order their rings and thereby decrease their height.

A known solution JP2010195522A discloses a system for vibrating a coil carried on a pallet, with the pallet being movable along a conveyor, said system comprising: an elevator mechanism for lifting and supporting the pallet; and means for vibrating said elevator mechanism to thereby vibrate the pallet and the coil carried thereon. However this solution requires the use of a lateral arm for displacing the coil/container onto the conveyor way after pouring.

Long product mills typically accumulate rod and smaller bar products into coils that are compacted and bound for storage, shipping, and finally pay-off to the end user's machinery. The coils must comprise well-ordered packages to survive such processes without damage from material handling equipment.

The coils must be bound tight and held secure while compacted by relatively high compacting forces. The compacting forces are known to damage the product rings when there is a loose overlay pattern in the ring array resulting in the compacting forces being applied to a minimized cross sectional area of the coil wall. This is evident when the uncompacted coil heights are relatively high, signaling a disarrayed ring pattern within the coil. Well-ordered rings provide more surface areas to withstand compacting pressures and thereby diminish any potential galling damage due to rings slipping violently over adjacent rings during compaction. This type of damage is not normally seen from the outside of the coil and not detected until the coil arrives at the customer's payoff equipment. At this point the coils have a high rate of rejection, particularly when the product is a low carbon, stainless steel alloy or other relatively soft steel.

To deal with these problems, coil packages are sometimes subjected to a water and soap high pressure spray (or similar liquid) to provide some lubricant to the rings. The idea is that the lubricant will allow the loose overlaid rings to slip more freely during the compaction process without surface galling. Depending upon the coil temperature, this process may change the product properties; accelerate rusting of the product and cause rapid corrosion of the material handling equipment due to the ambient steam environment.

In accordance with one aspect of the present invention, after the coils leave the pouring reels or reform station, they are subjected to vibration, which re-orders and more uniformly distributes the rings, thus decreasing coil height and any potential internal ring damage during subsequent compaction and banding. The vibration system is fully automatic and requires no liquids or lubricants. Thus, there is no risk of changing the product's metallurgical properties, or the product rusting, staining or being contaminated by foreign materials.

In accordance with another aspect of the present invention, the coils are enclosed and radially contained during vibration, thereby preventing any tendency of the coils to fall to one side.

In an exemplary embodiment of a system in accordance with the present invention, a coil is carried on a pallet, with the pallet being supported on and movable along a conveyor. An elevator mechanism serves to lift and support the pallet in a raised position spaced above the conveyor. A vibration inducing means is employed to vibrate the elevator mechanism and to thereby also vibrate the pallet and the coil carried thereon.

The elevator mechanism may comprise a lift frame vertically adjustable between a lower position spaced beneath the pallet supported on the conveyor, and an upper position supporting the pallet in its raised position above the conveyor.

Clamps may be provided for releasably securing the pallet to the lift frame when the lift frame is in its raised position. The lift frame may be vertically adjustable by wedge assemblies. Vibration isolation mounts may be interposed between the lift frame and the wedge assemblies.

The means for vibrating the elevator mechanism may comprise vibration motors configured and arranged to vibrate the lift frame.

The coil may be internally supported by a stem projecting vertically from the pellet, and means in the form of pivotal side guides may be provided for radially confining the coil when the pallet is in its raised position.

Such advantageous aspects of the invention are claimed in the present patent application and are described over the following drawings.
Fig. 1 is a front view of a coil vibration station in accordance with an exemplary embodiment of the present invention, showing the pallet at rest on the conveyor prior to the coil undergoing vibration;
Fig. 2 is a view similar to Fig. 1 showing the pallet lifted from the conveyor in readiness for a vibration cycle;
Fig. 3 is a view similar to Figs. 1 and 2 showing the addition of vertical guides in their open positions;
Fig. 4 is a view similar to Fig. 3 showing the guides in their closed positions; and
Fig. 5 is a perspective view of a vibration isolation mount.

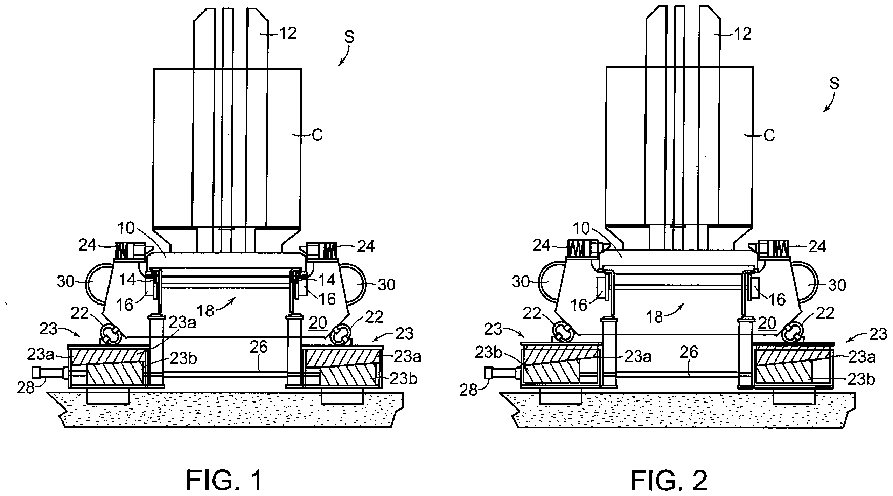

With reference initially to Fig. 1, a coil "C" is shown supported on a pallet 10. The pallet has a stem 12 projecting vertically through the center of the coil. The pallet is in turn supported as at 14 on the rollers 16 of a conveyor generally indicated at 18. In a typical installation, conveyor 18 will extend from the mill's pouring reels or reform station (not shown) to coil compactors (also not shown).

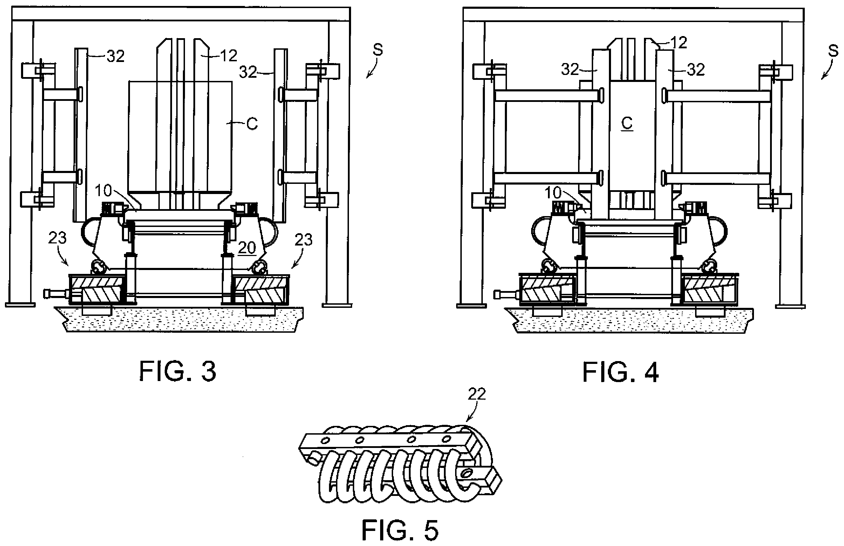

A vibration station "S" at a location along the conveyor includes a lift frame 20 supported by vibration isolation mounts 22, which may be of the type depicted in Fig. 5. The vibration isolation mounts serve to support the lift frame on wedge assemblies 23.

Spring applied hydraulically releasable clamps 24 are provided on the lift frame 20 on opposite sides of the pallet 10. At the stage shown in Fig. 1, the clamps 24 are hydraulically released to accommodate freedom of movement of the pallet 10 along the conveyor 18.

The wedge assemblies 23 may comprise upper and lower wedge components 23a, 23b, with the lower wedge components being joined by a connecting rod 26 and operated by a hydraulic cylinder 28.

Vibration motors 30, which may for example be electric external vibrators of the type supplied by Netter GmbH, are mounted on either side of the lift frame 20.

As depicted in Fig. 1, the coil C has been received from a pouring reel or reform station and carried on the pallet 10 to the vibration station S.

As shown in Fig. 2, the lower wedge components 23b of the wedge assemblies 23 are activated by the hydraulic cylinder 28 (pulled to the left) to lift the frame 20, resulting in the pallet 10 being raised off of the conveyor rollers 16.

The clamps 24 are closed to firmly anchor the pallet 10 on the frame 20, after which the vibration motors 30 are activated to vibrate the frame 20 along with the pallet 10 and the coil C carried thereon. Coil vibration serves to more uniformly re-order the rings without external force, thereby decreasing coil height and avoiding potential internal ring damage.

Advantageously, the vibration station S may be equipped with means in the form of pivotal side guides 32, shown in open positions in Fig. 3 on opposite sides of the conveyor 18. When the pallet is in its raised position, as shown in Fig. 4, the side guides may be closed to enclose and radially confine the coil as it is being vibrated.

## Claims

1. A system for vibrating a coil (C) comprising:
a pallet (10) for carrying the coil;
a conveyor (18) along which said pallet is movable;
an elevator mechanism for lifting and supporting the pallet; and
means for vibrating (S) said elevator mechanism to thereby vibrate the pallet and the coil carried thereon , the system being
**characterized in that** said elevator mechanism is configured for lifting and supporting the pallet at a raised off conveyor rollers (16) position spaced above said conveyor wherein the pallet lifted from the conveyor is in readiness for a vibration cycle.

2. The system of claim 1, wherein said elevator mechanism comprises a lift frame (20) vertically adjustable between a lower position spaced beneath the pallet supported on said conveyor, and an upper position supporting the pallet in said raised positions.

3. The system of claim 2, further comprising clamps (24) for releasably securing said pallet to said lift frame when said lift frame is in said raised position.

4. The system of claim 2, wherein said lift frame is vertically adjustable by wedge assemblies (23).

5. The system of claim 4, further comprising vibration isolation mounts (22) interposed between said lift frame and said wedge assemblies.

6. The system of claim 2, wherein said means for vibrating comprises vibration motors (30) configured and arranged to vibrate said lift frame.

7. The system of claim 1, wherein said the pallet has a stem (12) projecting vertically through the center of the coil.

## Patentansprüche

1. System zum Schwingen einer Spule (C), Folgendes umfassend:
einen Träger (10) zum Tragen der Spule;
einen Förderer (18), entlang dessen der Träger beweglich ist;
einen Aufzugmechanismus zum Heben und Abstützen des Trägers und
eine Einrichtung zum Schwingen (S) des Aufzugmechanismus, um dadurch den Träger und die darauf getragene Spule in Schwingung zu versetzen, wobei das System **dadurch gekennzeichnet ist, dass** der Aufzugmechanismus zum Heben und Abstützen des Trägers in einer über die Transportrollen (16) angehobene und über dem Förderer beabstandete Position ausgelegt ist, wobei der vom Förderer angehobene Träger für einen Schwingungszyklus bereit ist.

2. System nach Anspruch 1, wobei der Aufzugmechanismus einen Hubrahmen (20) umfasst, der zwischen einer unteren Position, die unter dem vom Förderer getragenen Träger beabstandet ist, und einer oberen Position, in der der Träger in der angehobenen Position abgestützt wird, vertikal einstellbar ist.

3. System nach Anspruch 2, ferner Klemmen (24) zum lösbaren Befestigen des Trägers am Hubrahmen umfassend, wenn sich der Hubrahmen in der angehobenen Position befindet.

4. System nach Anspruch 2, wobei der Hubrahmen durch Keilanordnungen (23) vertikal einstellbar ist.

5. System nach Anspruch 4, ferner Schwingungsisolierungshalterungen (22) umfassend, die zwischen dem Hubrahmen und den Keilanordnung angeordnet sind.

6. System nach Anspruch 2, wobei die Schwingungseinrichtung Schwingungsmotoren (30) umfasst, die dazu ausgelegt und angeordnet sind, den Hubrahmen in Schwingung zu versetzen.

7. System nach Anspruch 1, wobei der Träger einen Schaft (12) aufweist, der vertikal durch die Mitte der Spule vorsteht.

## Revendications

1. Système permettant de faire vibrer une bobine (C) comprenant :
une palette (10) servant à porter la bobine ;
un convoyeur (18) le long duquel ladite palette peut être déplacée ;
un mécanisme élévateur servant à lever et à supporter la palette ; et
un moyen servant à faire vibrer (S) ledit mécanisme élévateur, ce qui permet de faire vibrer la palette et la bobine portée sur celui-ci, le système étant **caractérisé en ce que** ledit mécanisme élévateur est configuré pour lever et supporter la palette au niveau d'une position de rouleaux de convoyeur surélevés (16) situés à distance au-dessus dudit convoyeur, dans lequel la palette levée à partir du convoyeur est prête pour un cycle de vibrations.

2. Système selon la revendication 1, dans lequel ledit mécanisme élévateur comprend un cadre de levage (20) pouvant être réglé verticalement entre une position plus basse située à distance sous la palette supportée sur ledit convoyeur, et une position plus élevée supportant la palette dans ladite position surélevée.

3. Système selon la revendication 2, comprenant en outre des pinces (24) pour une fixation libérable de ladite palette audit cadre de levage lorsque ledit cadre de levage se trouve dans ladite position surélevée.

4. Système selon la revendication 2, dans lequel ledit cadre de levage peut être réglé verticalement par des ensembles de cales (23).

5. Système selon la revendication 4, comprenant en outre des montages anti-vibrations (22) interposés entre ledit cadre de levage et lesdits ensembles de cales.

6. Système selon la revendication 2, dans lequel ledit moyen servant à faire vibrer comprend des moteurs de vibrations (30) configurés et disposés pour faire vibrer ledit cadre de levage.

7. Système selon la revendication 1, dans lequel ladite palette comporte une tige (12) faisant saillie verticalement à travers le centre de la bobine.
